# EUROPÄISCHE PATENTSCHRIFT

(11) **EP 2 645 215 B1**
(45) Veröffentlichungstag und Bekanntmachung des Hinweises auf die Patenterteilung: **14.08.2019**
(21) Anmeldenummer: 12161839.1
(22) Anmeldetag: 28.03.2012
(51) Int. Cl.: G06F 12/06

(54) **Anzeigeeinrichtung mit rückgelesener Anzeige**
Display device with read back display
Dispositif d'affichage avec affichage restauré

(43) Veröffentlichungstag der Anmeldung: 02.10.2013
(73) Patentinhaber: Siemens Aktiengesellschaft, 80333 München (DE)
(72) Erfinder: Schwesig, Günter, 91054 Erlangen (DE); Walders, Hanno, 91056 Erlangen (DE)

(56) Entgegenhaltungen:
- WO-A2-2012/006431
- US-A1- 2003 111 533
- US-A1- 2005 200 293
- US-A1- 2009 211 820
- US-A1- 2009 225 058
- US-A1- 2009 231 354

## Beschreibung

Die vorliegende Erfindung betrifft eine Anzeigeeinrichtung,
- wobei die Anzeigeeinrichtung eine Vielzahl in einer zweidimensionalen Matrix angeordneter Zellen aufweist,
- wobei in den Zellen Leuchtelemente angeordnet sind,
- wobei die Anzeigeeinrichtung eine Ansteuereinrichtung aufweist,
- wobei die Leuchtelemente von der Ansteuereinrichtung entsprechend einem Sollansteuermuster individuell mit Steuersignalen angesteuert werden,
- wobei in den Zellen zusätzlich zu den Leuchtelementen Rücckoppelelemente angeordnet sind,
- wobei von den Rückkoppelelementen von tatsächlichen Ansteuerzuständen der Leuchtelemente abhängige Rückkoppelsignale an eine Auswertungseinrichtung der Anzeigeeinrichtung übermittelt werden.

Derartige Anzeigeeinrichtungen sind beispielsweise aus der US 2009/225 058 A1 bekannt. Die Rückkoppelelemente sind als Lichtsensoren ausgebildet. Mittels der Lichtsensoren wird aus einer Blickrichtung auf das TFT-Display fallendes Licht erfasst. Dies kann im Sinne einer Berührerkennung ausgewertet werden, so dass das entsprechende TFT-Display als Touchscreen genutzt werden kann.

Aus der DE 10 2007 038 722 A1 ist bekannt, mittels einer Mithöreinrichtung zu überprüfen, welche für die auszugebenden Informationen charakteristischen Daten eine Ansteuereinheit an eine Anzeigeeinrichtung übermittelt.

Aus der WO 2012/006 431 A2 ist eine Anzeigeeinrichtung bekannt, die eine Vielzahl in einer zweidimensionalen Matrix angeordneter Zellen aufweist. In den Zellen sind Leuchtelemente angeordnet. Die Anzeigeeinrichtung weist eine Ansteuereinrichtung auf, von der die Leuchtelemente entsprechend einem Sollansteuermuster individuell mit Steuersignalen angesteuert werden. Die Leuchtelemente sind von einer Frontabdeckung abgedeckt. Die Frontabdeckung ist als elastisch deformierbare Frontabdeckung ausgebildet. Eine Sensoreinrichtung, mittels derer ein Berühren der Frontabdeckung erfasst wird, spricht erst auf ein Verformen der Frontabdeckung, nicht aber bereits auf ein Berühren der Frontabdeckung an. Weiterhin spricht die entsprechende Sensoreinrichtung solange auf das Verformen an, wie die Verformung aufrecht erhalten bleibt.

Aus der US 2005/0200293 A1 ist ein Display bekannt, bei dem eine Kalibriereinrichtung mit entsprechenden Sensoren auch zur Detektion von Benutzereingaben verwendet wird. Die zur Kalibrierung ohnehin vorhandenen Sensoren der Kalibriereinrichtung werden also doppelt genutzt, einerseits zur Kalibrierung und andererseits um bei dem Display in einfacher und kostengünstiger Weise, insbesondere ohne zusätzliche Hardware, auch Touch-Eingaben oder Eingaben mittels Leuchtstift erkennen zu können.

US2009/231354A1 offenbart einen Farb-Controller für ein Leuchtmittel, umfassend einen Thru-Converter zum Konvertieren eines Eingangssignals in ein Beleuchtungssignal, einen Beleuchtungssensor zum Erfassen eines Lichtsignals des Leuchtmittels und einen Feedback-Controller zur Kalibrierung des Leuchtmittels auf Basis des Lichtsignals.

US2003/0111533A1 offenbart ein Farbkontrollsystem zur Erzeugung eines gewünschten Weißlichts aus einer Vielzahl roter, grüner und blauer LEDs. Das erzeugte Licht wird mittels eines weißlichtempfindlichen Sensors gemessen und mit einem Referenzlicht verglichen. Ansteuersignale für die LEDs werden unter Berücksichtigung des Vergleichsergebnisses erzeugt.

Die Aufgabe der vorliegenden Erfindung besteht darin, Möglichkeiten zu schaffen, mittels derer das von der Anzeigeeinrichtung tatsächlich ausgegebene Bild auf möglichst einfache und zuverlässige Weise auf Korrektheit überprüft werden kann.

Die Aufgabe wird durch eine Anzeigeeinrichtung mit den Merkmalen des Anspruchs 1 gelöst. Vorteilhafte Ausgestaltungen der erfindungsgemäßen Anzeigeeinrichtung sind Gegenstand der abhängigen Ansprüche 2 bis 9.

Erfindungsgemäß ist vorgesehen, eine Anzeigeeinrichtung der eingangs genannten Art dadurch auszugestalten,
- dass die Auswertungseinrichtung anhand der Rückkoppelsignale ein Rückkoppelmuster ermittelt,
- dass die Auswertungseinrichtung das Rückkoppelmuster mit dem Sollansteuermuster vergleicht und
- dass die Auswertungseinrichtung im Falle der Übereinstimmung des Rückkoppelmusters mit dem Sollansteuermuster eine Normalreaktion und im Falle der Nichtübereinstimmung des Rückkoppelmusters mit dem Sollansteuermuster eine von der Normalreaktion verschiedene Fehlerreaktion ergreift.

In der Regel ist die zweidimensionale Matrix aus einer Berührrichtung der Anzeigeeinrichtung gesehen mit einer Frontabdeckung abgedeckt.

In dem Fall, dass die Rückkoppelelemente als Lichtsensoren ausgebildet sind, ist vorzugsweise die Frontabdeckung teilreflektierend oder streuend ausgebildet und werden von den Leuchtelementen emittierte Lichtsignale mittels der Frontabdeckung teilweise in die Lichtsensoren reflektiert oder gestreut.

Vorzugsweise weist die Anzeigeeinrichtung mindestens zwei Sensoreinrichtungen auf und wird mittels der Sensoreinrichtungen unabhängig voneinander erfasst, ob und ggf. an welcher Stelle die zweidimensionale Matrix oder eine die zweidimensionale Matrix abdeckende Frontabdeckung berührt wird. Dadurch kann die Anzeigeeinrichtung zu einer vollwertigen fehlersicheren Aus- und Eingabeeinrichtung ertüchtigt werden. Eine der Sensoreinrichtungen kann die Lichtsensoren umfassen.

Die Frontabdeckung kann insbesondere als elastisch deformierbare Frontabdeckung ausgebildet sein. In diesem Fall spricht vorzugsweise mindestens eine der Sensoreinrichtungen erst auf ein Verformen der Frontabdeckung, nicht aber bereits auf ein Berühren der Frontabdeckung an. Dadurch kann die Zuverlässigkeit der Anzeigeeinrichtung erhöht und können Fehlauslösungen vermieden werden.

Vorzugsweise spricht zumindest diejenige der Sensoreinrichtungen, die erst auf ein elastisches Verformen der Frontabdeckung, nicht aber bereits auf ein Berühren der Frontabdeckung anspricht, solange auf das Verformen an, wie die Verformung aufrecht erhalten bleibt. Es wird also nicht nur die Verformung der Frontabdeckung detektiert, sondern auch deren Dauer.

Aufgrund der erfindungsgemäßen Ausgestaltung der Anzeigeeinrichtung kann diese insbesondere als Ausgabeeinrichtung einer Mensch-Maschine-Schnittstelle einer fehlersicheren industriellen Steuerung verwendet werden.

Alternativ oder zusätzlich zu einer Ausbildung der Rückkoppelelemente als Lichtsensoren nebst Reflexion oder Streuung an einer Frontabdeckung ist es möglich, dass die Steuersignale in der zweidimensionalen Matrix direkt auf die Rückkoppelelemente einkoppeln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild einer industriellen technischen Anlage,
- FIG 2: eine perspektivische Darstellung einer Anzeigeeinrichtung,
- FIG 3: eine funktionale Darstellung der Anzeigeeinrichtung,
- FIG 4: ein Ablaufdiagramm,
- FIG 5 und 6: funktionale Darstellungen von modifizierten Anzeigeeinrichtungen und
- FIG 7: ein Zeitdiagramm.

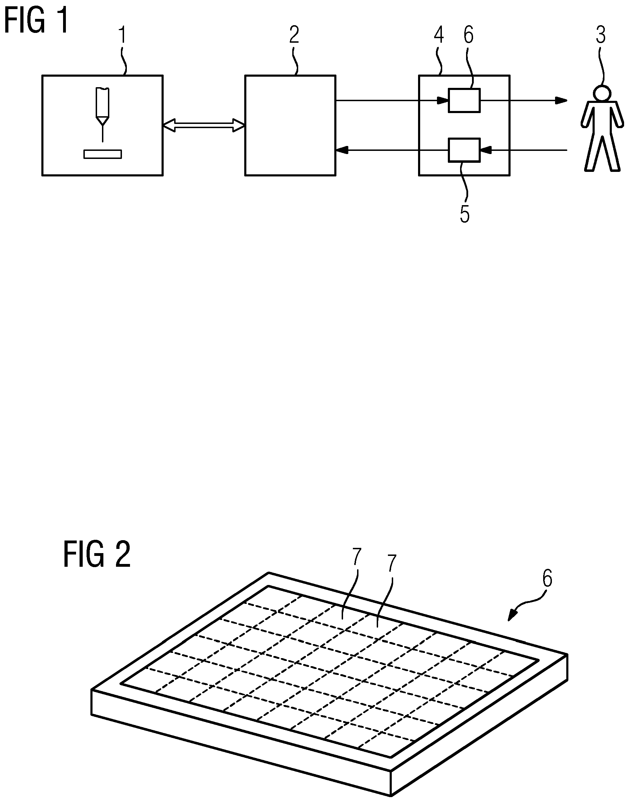

Gemäß FIG 1 wird eine industrielle technische Einrichtung 1 - rein beispielhaft ist in FIG 1 zu diesem Zweck eine Bohrmaschine dargestellt - mittels einer industriellen Steuerung 2 gesteuert. Die industrielle Steuerung 2 ist als fehlersichere Steuerung ausgebildet, d. h. dass ein einzelner Fehler nicht dazu führt, dass die gesteuerte Einrichtung 1 in einen unsicheren Zustand geraten kann, in dem sie Schäden an einer Bedienperson 3 und/oder an sich selbst oder einer anderen Einrichtung hervorrufen kann. Fehlersichere Steuerungen sind Fachleuten allgemein bekannt. Rein beispielhaft wird auf dem Gebiet von speicherprogrammierbaren Steuerungen auf die SIMATIC S7-300F der Anmelderin verwiesen.

Die industrielle Steuerung 2 weist eine Mensch-Maschine-Schnittstelle 4 auf. Die Mensch-Maschine-Schnittstelle 4 weist einerseits eine (sichere) Eingabeeinrichtung 5 und andererseits eine Ausgabeeinrichtung 6 auf. Über die Eingabeeinrichtung 5 nimmt die industrielle Steuerung 2 von der Bedienperson 3 Eingaben entgegen. Über die Ausgabeeinrichtung 6 gibt die industrielle Steuerung 2 Informationen an die Bedienperson 3 aus.

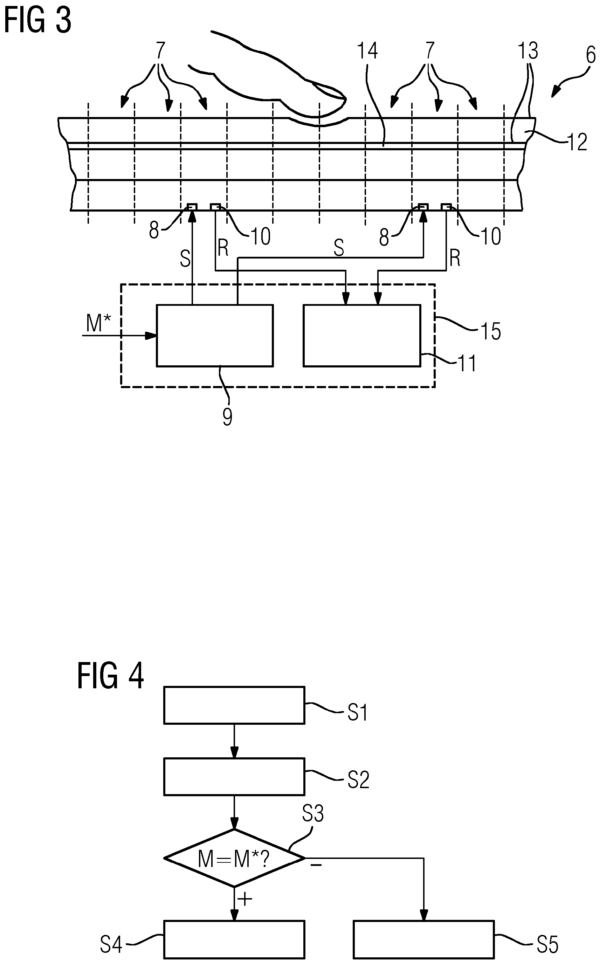

Gemäß FIG 2 ist die Ausgabeeinrichtung 6 als Anzeigeeinrichtung 6 ausgebildet. Die Anzeigeeinrichtung 6 weist eine Vielzahl von Zellen 7 auf. Die Zellen 7 sind in einer zweidimensionalen Matrix angeordnet. Oftmals ist die Anzahl an Zellen 7 erheblich. Beispielsweise können 100 x 100 Zellen 7 oder mehr vorhanden sein. In den Zellen 7 sind gemäß FIG 3 Leuchtelemente 8 angeordnet, beispielsweise sogenannte TFTs oder leuchtende LCDs. Die Leuchtelemente 8 werden von einer Ansteuereinrichtung 9 der Anzeigeeinrichtung 6 entsprechend einem Sollansteuermuster M* individuell mit Steuersignalen S angesteuert. Aufgrund der Ansteuerung geben die Leuchtelemente 8 - eine ordnungsgemäße Funktion der Anzeigeeinrichtung 6 vorausgesetzt - entsprechende Lichtsignale an die Bedienperson 3 aus.

In den Zellen 7 sind weiterhin Rückkoppelelemente 10 angeordnet. Von den Rückkoppelelementen 10 werden Rückkoppelsignale R an eine Auswertungseinrichtung 11 der Anzeigeeinrichtung 6 übermittelt. Die Auswertungseinrichtung 11 nimmt die Rückkoppelsignale R gemäß FIG 4 in einem Schritt S1 entgegen.

Die Rückkoppelsignale R sind von den tatsächlichen Ansteuerzuständen der Leuchtelemente 8 abhängig. Beispielsweise ist es möglich, dass die Steuersignale S in der zweidimensionalen Matrix direkt auf die Rückkoppelelemente 10 einkoppeln (cross talk). Es ist also beispielsweise möglich, dass ein elektrischer Strom, mit dem ein bestimmtes Leuchtelement 8 beaufschlagt wird, in einem oder mehreren der benachbarten Rücckoppelelemente 10 einen Strom oder eine Spannung hervorruft, wobei der hervorgerufene Strom oder die hervorgerufene Spannung oder eine daraus abgeleitete Größe dem Rückkoppelsignal R entspricht.

In der Regel ist die zweidimensionale Matrix - unabhängig davon, ob die Steuersignale S direkt in die Rückkoppelelemente 10 einkoppeln oder nicht - aus einer Berührrichtung der Anzeigeeinrichtung 6 gesehen mit einer Frontabdeckung 12 abgedeckt. Die Frontabdeckung 12 kann entsprechend der Darstellung in FIG 3 als elastisch deformierbare Frontabdeckung 12 ausgebildet sein. Unabhängig davon, ob die Frontabdeckung 6 deformierbar ist oder nicht, weist die Frontabdeckung 12 zwei Grenzflächen 13 auf. Eine der Grenzflächen 13 ist der zweidimensionalen Matrix zugeordnet, die andere der Bedienperson 3.

Falls die Grenzflächen 13 glatt sind, wird an beiden Grenzflächen 13 ein Teil des von den Leuchtelementen 8 abgestrahlten Lichts - also die von den Leuchtelementen 8 emittierten Lichtsignale - reflektiert. Die Frontabdeckung 12 ist in diesem Fall teilreflektierend ausgebildet. Alternativ können die beiden Grenzflächen 13 leicht angeraut sein, so dass die Frontabdeckung 12 streuend ausgebildet ist. Unabhängig davon, ob die Frontabdeckung 12 reflektierend oder streuend ausgebildet ist, gelangt ein Teil des von den Leuchtelementen 8 emittierten Lichts von der Frontabdeckung 12 aus wieder zurück in die zweidimensionale Matrix und trifft dort die Rücckoppelelemente 10. Der Unterschied besteht lediglich darin, dass im einen Fall das Licht (teilweise) reflektiert wird und im anderen Fall gestreut wird.

Aufgrund des Umstands, dass ein Teil des von den Leuchtelementen 8 emittierten Lichts über die Frontabdeckung 12 auf die Rückkoppelelemente 10 gelenkt wird, ist es daher möglich, die Rückkoppelelemente 10 als Lichtsensoren auszubilden, beispielsweise als Fotodioden.

Falls die Grenzflächen 13 als glatte Grenzflächen 13 ausgebildet sind, ergibt sich direkt aufgrund der Unterschiede im Brechungsindex eine entsprechende Reflexion. Es ist jedoch möglich, dass auf einer der Grenzflächen 13 - eventuell auch auf beiden Grenzflächen 13 - eine spezielle teilreflektierende Schicht 14 angeordnet ist, um den Reflexionseffekt gezielt zu betonen.

Die Auswertungseinrichtung 11 kann eine von der Ansteuereinrichtung 9 verschiedene Einrichtung sein. Alternativ können die beiden Einrichtungen 9, 11, wie in FIG 3 durch eine strichpunktierte Umrandung angedeutet ist, zu einer gemeinsamen Kontrolleinrichtung 15 zusammengefasst sein. In jedem Fall aber ermittelt die Auswertungseinrichtung 11 gemäß FIG 2 in einem Schritt S2 anhand der Rückkoppelsignale R ein Rücckoppelmuster M. Weiterhin vergleicht die Auswertungseinrichtung 11 in einem Schritt S3 das Rückkoppelmuster M mit dem Sollansteuermuster M*.

Stimmt das Rückkoppelmuster M mit dem Sollansteuermuster M* überein, geht die Auswertungseinrichtung 11 gemäß FIG 4 zu einem Schritt S4 über. Im Schritt S4 ergreift die Auswertungseinrichtung 11 eine Normalreaktion. Beispielsweise kann die Auswertungseinrichtung 11 eine OK-Meldung an die fehlersichere industrielle Steuerung 2 übermitteln. Wenn hingegen das Rückkoppelmuster M mit dem Sollansteuermuster M* nicht übereinstimmt, geht die Auswertungseinrichtung 11 zu einem Schritt S5 über. Im Schritt S5 ergreift die Auswertungseinrichtung 11 eine Fehlerreaktion. Die Fehlerreaktion ist von der Normalreaktion verschieden. Beispielsweise kann die Fehlerreaktion schlichtweg darin bestehen, dass die Normalreaktion nicht ausgeführt wird. Alternativ oder zusätzlich ist eine eigene Reaktion möglich, beispielsweise das Ausgeben einer Fehlermeldung.

Es ist möglich, im Rahmen des Schrittes S3 das Rückkoppelmuster M so, wie es ist, mit dem Sollansteuermuster M*, so wie es ist, zu vergleichen. Vorzugsweise führt die Auswertungseinrichtung 11 vor dem Vergleich jedoch eine örtliche Tiefpassfilterung der beiden Muster M, M* durch und vergleicht die tiefpassgefilterten Muster miteinander.

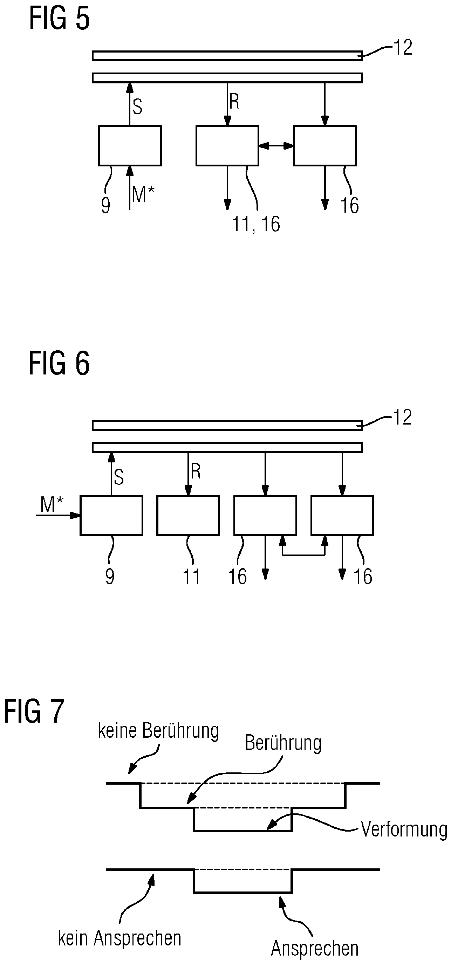

Es ist möglich, die erfindungsgemäße Anzeigeeinrichtung 6 ausschließlich als Anzeigeeinrichtung zu betreiben. Ein Beispiel für einen Anwendungsfall derartiger Anzeigeeinrichtungen 6 sind größere Anzeigetafeln in öffentlichen Gebäuden wie beispielsweise Flughäfen oder Bahnhöfen, auf denen sicherheitsrelevante oder auch andere Informationen angezeigt werden sollen. Vorzugsweise umfasst die erfindungsgemäße Anzeigeeinrichtung 6 jedoch zusätzlich eine sichere Eingabefunktionalität. In diesem Fall weist die Anzeigeeinrichtung 6 gemäß den FIG 5 und 6 mindestens zwei Sensoreinrichtungen 16 auf. Mittels der Sensoreinrichtungen 16 wird - unabhängig voneinander - erfasst, ob und ggf. an welcher Stelle (unter Umständen sogar an welchen Stellen) die Frontabdeckung 12 berührt wird. Entsprechende Technologien sind dem Fachmann bekannt. Falls die Frontabdeckung 12 nicht vorhanden ist - was in Einzelfällen möglich ist -, wird mittels der Sensoreinrichtungen 16 direkt ein Berühren der zweidimensionalen Matrix erkannt.

Falls die Rückkoppelelemente 10 als Lichtsensoren ausgebildet sind, kann entsprechend der Darstellung von FIG 5 eine der Sensoreinrichtungen 16 die Lichtsensoren 10 mit umfassen. Alternativ können entsprechend der Darstellung von FIG 6 beide Sensoreinrichtungen 16 unabhängig von den Rückkoppelelementen 10 sein.

Falls die Frontabdeckung 12 deformierbar ist, spricht entsprechend der Darstellung von FIG 7 vorzugsweise mindestens eine der Sensoreinrichtungen 16 - vorzugsweise beide Sensoreinrichtungen 16 - nicht bereits auf ein Berühren der Frontabdeckung 12 an, sondern erst auf ein Verformen der Frontabdeckung 12. Entsprechende Technologien sind dem Fachmann bekannt. Weiterhin spricht entsprechend der Darstellung von FIG 7 die entsprechende Sensoreinrichtung 16 vorzugsweise so lange auf das Verformen an, wie die Verformung aufrecht erhalten bleibt. Es wird also nicht nur der Berührzeitpunkt erfasst, sondern auch die Berührdauer. Entsprechende Technologien sind dem Fachmann wieder bekannt.

In dem Fall, dass die Sensoreinrichtung 16 (bzw. die Sensoreinrichtungen 16) auf ein Verformen der Frontabdeckung 12 ansprechen, ist es beispielsweise möglich, dass durch geänderte Reflexions- oder Streuwirkung der entsprechende Zustand erkannt wird. Auch ist es möglich, dass das Verformen andere optische Eigenschaften der Frontabdeckung 12 beeinflusst.

Die vorliegende Erfindung weist viele Vorteile auf. Insbesondere ist auf einfache Weise eine sichere Anzeige realisierbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Anzeigeeinrichtung,
- wobei die Anzeigeeinrichtung eine Vielzahl in einer zweidimensionalen Matrix angeordneter Zellen (7) aufweist,
- wobei in den Zellen (7) Leuchtelemente (8) und Rückkoppelelemente (10) angeordnet sind,
- wobei die Anzeigeeinrichtung eine Ansteuereinrichtung (9) aufweist,
- wobei die Leuchtelemente (8) von der Ansteuereinrichtung (9) entsprechend einem Sollansteuermuster (M*) individuell mit Steuersignalen (S) angesteuert werden,
- wobei von den Rückkoppelelementen (10) von tatsächlichen Ansteuerzuständen der Leuchtelemente (8) abhängige Rückkoppelsignale (R) an eine Auswertungseinrichtung (11) der Anzeigeeinrichtung übermittelt werden,
- wobei die Auswertungseinrichtung (11) anhand der Rückkoppelsignale (R) ein Rückkoppelmuster (M) ermittelt,
- wobei die Auswertungseinrichtung (11) das Rückkoppelmuster (M) mit dem Sollansteuermuster (M*) vergleicht,
- wobei die Auswertungseinrichtung (11) im Falle der Übereinstimmung des Rückkoppelmusters (M) mit dem Sollansteuermuster (M*) eine Normalreaktion und im Falle der Nichtübereinstimmung des Rückkoppelmusters (M) mit dem Sollansteuermuster (M*) eine von der Normalreaktion verschiedene Fehlerreaktion ergreift.

2. Anzeigeeinrichtung nach Anspruch 1,
**dadurch gekennzeichnet, dass** die zweidimensionale Matrix aus einer Berührrichtung der Anzeigeeinrichtung gesehen mit einer Frontabdeckung (12) abgedeckt ist.

3. Anzeigeeinrichtung nach Anspruch 2,
**dadurch gekennzeichnet, dass** die Rückkoppelelemente (10) als Lichtsensoren (10) ausgebildet sind, dass die Frontabdeckung (12) teilreflektierend oder streuend ausgebildet ist und dass von den Leuchtelementen (8) emittierte Lichtsignale mittels der Frontabdeckung (12) teilweise in die Lichtsensoren (10) reflektiert oder gestreut werden.

4. Anzeigeeinrichtung nach Anspruch 1, 2 oder 3,
**dadurch gekennzeichnet, dass** die Anzeigeeinrichtung mindestens zwei Sensoreinrichtungen (16) aufweist und dass mittels der Sensoreinrichtungen (16) unabhängig voneinander erfasst wird, ob und ggf. an welcher Stelle die zweidimensionale Matrix oder eine die zweidimensionale Matrix abdeckende Frontabdeckung (12) berührt wird.

5. Anzeigeeinrichtung nach Anspruch 3 und 4,
**dadurch gekennzeichnet, dass** eine der Sensoreinrichtungen (16) die Lichtsensoren (10) umfasst.

6. Anzeigeeinrichtung nach Anspruch 4 oder 5,
**dadurch gekennzeichnet, dass** die Frontabdeckung (12) als deformierbare Frontabdeckung (12) ausgebildet ist und dass mindestens eine der Sensoreinrichtungen (16) erst auf ein Verformen der Frontabdeckung (12), nicht aber bereits auf ein Berühren der Frontabdeckung (12) anspricht.

7. Anzeigeeinrichtung nach Anspruch 6,
**dadurch gekennzeichnet, dass** zumindest diejenige der Sensoreinrichtungen (16), die erst auf ein Verformen der Frontabdeckung (12), nicht aber bereits auf ein Berühren der Frontabdeckung (12) anspricht, solange auf das Verformen anspricht, wie die Verformung aufrecht erhalten bleibt.

8. Anzeigeeinrichtung nach einem der obigen Ansprüche,
**dadurch gekennzeichnet, dass** sie als Ausgabeeinrichtung einer Mensch-Maschine-Schnittstelle (4) einer fehlersicheren industriellen Steuerung (2) verwendet wird.

9. Anzeigeeinrichtung nach einem der obigen Ansprüche,
**dadurch gekennzeichnet, dass** die Steuersignale (S) in der zweidimensionalen Matrix direkt auf die Rückkoppelelemente (10) einkoppeln.

## Claims

1. Display device,
- wherein the display device has a plurality of cells (7) arranged in a two-dimensional matrix,
- wherein luminous elements (8) and feedback elements (10) are arranged in the cells (7),
- wherein the display device has a control device (9),
- wherein the luminous elements (8) are triggered individually by the control device (9) in accordance with a setpoint trigger pattern (M*), by means of control signals (S),
- wherein the feedback elements (10) transmit feedback signals (R) that are dependent on actual trigger states of the luminous elements (8) to an evaluation device (11) of the display device,
- wherein the evaluation device (11) determines a feedback pattern (M) on the basis of the feedback signals (R),
- wherein the evaluation device (11) compares the feedback pattern (M) with the setpoint trigger pattern (M*), and
- wherein, in the event that the feedback pattern (M) and the setpoint trigger pattern (M*) match, the evaluation device (11) executes a normal response, and in the event that the feedback pattern (M) and the setpoint trigger pattern (M*) do not match, the evaluation device (11) executes a fault response, which is different from the normal response.

2. Display device according to claim 1,
**characterised in that** the two-dimensional matrix is covered with a front cover (12), as seen from a touch direction of the display device.

3. Display device according to claim 2,
**characterised in that** the feedback elements (10) take the form of light sensors (10), **in that** the front cover (12) takes a form that is partly reflective or scattering, and **in that** light signals emitted by the luminous elements (8) are partly reflected or scattered into the light sensors (10) by means of the front cover (12).

4. Display device according to claim 1, 2 or 3,
**characterised in that** the display device has at least two sensor devices (16), and **in that** the sensor devices (16) detect, independently of one another, whether and if applicable where the two-dimensional matrix or a front cover (12) that covers the two-dimensional matrix is being touched.

5. Display device according to claim 3 and 4,
**characterised in that** one of the sensor devices (16) includes the light sensors (10).

6. Display device according to claim 4 or 5,
**characterised in that** the front cover (12) takes the form of a deformable front cover (12), and **in that** at least one of the sensor devices (16) responds only to deformation of the front cover (12) but not merely to the front cover (12) being touched.

7. Display device according to claim 6,
**characterised in that** at least the one of the sensor devices (16) which only responds to deformation of the front cover (12) but not merely to the front cover (12) being touched continues to respond to the deformation while the deformation is maintained.

8. Display device according to one of the preceding claims,
**characterised in that** it is used as an output device of a human-machine interface (4) of a fail-safe industrial controller (2).

9. Display device according to one of the preceding claims,
**characterised in that** the control signals (S) in the two-dimensional matrix are coupled directly to the feedback elements (10).

## Revendications

1. Dispositif d'affichage,
- dans lequel le dispositif d'affichage a une pluralité de cellules (7), disposées suivant une matrice en deux dimensions,
- dans lequel des éléments (8) d'éclairage et des éléments (10) de réaction sont disposés dans les cellules (7),
- dans lequel le dispositif d'affichage a un dispositif (9) de commande,
- dans lequel les éléments (8) d'éclairage sont commandés individuellement par des signaux (S) de commande, par le dispositif (9) de commande, conformément à un modèle (M*) de commande de consigne,
- dans lequel des signaux (R) de réaction, qui dépendent des états de commande réels des éléments (8) d'éclairage, sont transmis des éléments (10) de réaction à un dispositif (11) d'exploitation du dispositif d'affichage,
- dans lequel le dispositif (11) d'exploitation détermine un modèle (M) de réaction à l'aide des signaux (R) de réaction,
- dans lequel le dispositif (11) d'exploitation compare le modèle (M) de réaction au modèle (M*) de commande de consigne,
- dans lequel le dispositif (11) d'exploitation prend, si le modèle (M) de réaction coïncide avec le modèle (M*) de commande de consigne, une réaction normale et si le modèle (M) de réaction ne coïncide pas avec le modèle (M*) de commande de consigne, une réaction de défaut différente de la réaction normale.

2. Dispositif d'affichage suivant la revendication 1,
**caractérisé en ce que**
la matrice en deux dimensions est, considérée dans une direction de toucher du dispositif d'affichage, revêtue d'un recouvrement (12) avant.

3. Dispositif d'affichage suivant la revendication 2,
**caractérisé en ce que**
les éléments (10) de réaction sont constitués sous forme de capteurs (10) de lumière, **en ce que** le recouvrement (12) avant est constitué en étant réfléchissant partiellement ou diffusant et **en ce que** des signaux lumineux émis par les éléments (8) d'éclairage sont réfléchis ou diffusés en partie dans les capteurs (10) de lumière, au moyen du recouvrement (12) avant.

4. Dispositif d'affichage suivant la revendication 1, 2 ou 3,
**caractérisé en ce que**
le dispositif d'affichage a au moins deux dispositifs (16) de capteurs et **en ce qu'**au moyen des dispositifs (16) de capteur, indépendamment l'un de l'autre, il est détecté si et, le cas échéant, en quel point la matrice en deux dimensions ou un recouvrement (12) avant recouvrant la matrice en deux dimensions est touché.

5. Dispositif d'affichage suivant la revendication 3 ou 4,
**caractérisé en ce que**
l'un des dispositifs (16) de capteur comprend les capteurs (10) de lumière.

6. Dispositif d'affichage suivant la revendication 4 ou 5,
**caractérisé en ce que**
le recouvrement (12) avant est constitué sous la forme d'un recouvrement (12) avant déformable et **en ce qu'**au moins l'un des dispositifs (16) de capteur réagit seulement à une déformation de recouvrement (12) avant, mais non dès un toucher du recouvrement (12) avant.

7. Dispositif d'affichage suivant la revendication 6,
**caractérisé en ce qu'**
au moins les dispositifs (16) de capteur, qui réagissent seulement à une déformation du recouvrement (12) avant, mais non dès un toucher du recouvrement (12) avant, réagissent à la déformation tant que la déformation reste maintenue.

8. Dispositif d'affichage suivant l'une des revendications précédentes,
**caractérisé en ce qu'**
il est utilisé, comme dispositif de sortie d'une interface (4) homme-machine d'une commande (2) industrielle sécurisée vis-à-vis d'un défaut.

9. Dispositif d'affichage suivant l'une des revendications précédentes,
caractérisé en que
les signaux (S) de commande sont injectés dans la matrice en deux dimensions, directement sur les éléments (10) de réaction.
